# EUROPEAN PATENT SPECIFICATION

(11) **EP 4 282 721 B1**
(45) Date of publication and mention of the grant of the patent: **16.04.2025**
(21) Application number: 23175651.1
(22) Date of filing: 26.05.2023
(51) Int. Cl.: B60T 13/26

(54) **A TRAILER BRAKING SYSTEM**
ANHÄNGERBREMSSYSTEM
SYSTÈME DE FREINAGE DE REMORQUE

(30) Priority: 27.05.2022 GB 202207832
(43) Date of publication of application: 29.11.2023
(73) Proprietor: Haldex Aktiebolag, 261 24 Landskrona (SE)
(72) Inventor: HARRISON, Dudley, Lindley CV13 6DE (GB)
(74) Representative: Müller Schupfner & Partner Patent- und Rechtsanwaltspartnerschaft mbB (Muc)

(56) References cited:
- EP-A1- 3 967 561
- GB-A- 2 492 124
- US-A1- 2021 276 522

## Description

### FIELD

The invention relates to a trailer braking system. In embodiments, the invention is used in a trailer that is connectable to a towing vehicle.

### BACKGROUND

Heavy goods vehicle made up of a towing vehicle and a trailer are well known. It is extremely important that when such a vehicle is parked and / or a trailer is left without a towing vehicle, the vehicle / trailer are held stationary to reduce the risk of injuries and / or death to persons in the immediately vicinity. Park brakes achieve this to some extent as the spring brakes can be manually applied by a button present on the trailer side, which prevents any unwanted movement of the trailer.

Document US 2021/276522 A1 discloses a vehicle braking system comprising a spring brake actuator having a spring brake chamber, a spring brake control assembly and an immobiliser valve.

Embodiments of the present invention aim to alleviate one or more of problems or drawbacks of known trailer systems.

### BRIEF DESCRIPTION OF THE INVENTION

According to an aspect of the invention we provide a trailer braking system including:
a supply line for connection to a continuous source of pressurised fluid;
a trailer reservoir for storing a volume of pressurised fluid;
a spring brake, which has an apply position and a release position, and the spring brake moves to the release position when pressurised fluid is provided at or above a threshold;
a spring brake control valve, which controls the flow of fluid to the spring brake;
an immobiliser having a brake release position and an immobilise position, which control the flow of pressurised fluid to the spring brake control valve,
a temporary override valve having an override position and an inactive position, and being operable to move between positions independently of the pressure in the supply line; wherein when the temporary override valve is in the override position, the immobiliser remains in the immobilise position and the spring brake remains in the apply position when the supply line is unpressured, and the immobiliser is moved to its brake release position and the supply line is connected to the spring brake control valve automatically when the supply line is connected to a source of fluid, such that the spring brake is moved to the release position.

When the temporary override valve is in the inactive position, the immobiliser may be operable to move both to the brake release position, in which the spring brake control valve is operable to cause the flow of pressurised fluid into the spring brake or to vent the spring brake chamber, and to the immobilise position, in which the spring brake control valve is not operable

The trailer braking system may include a shunt valve. The shunt valve may have an activated position and a deactivated position. When the shunt valve is in the activated position, the trailer reservoir may be connected directly or indirectly to the spring brake control valve. When the shunt valve is in the deactivated position, the supply line may be connected to directly or indirectly to the spring brake control valve. Optionally, the shunt valve may be moved to its deactivated position when the supply line is connected to a source of pressurised fluid.

The trailer braking system may include a control line for connection to a source of pressurised fluid when there is a braking demand.

Movement of the temporary override valve to its inactive position may be directly or indirectly controlled by pressure in the control line, for example by the delivery of a modulator valve signalled by the control line. The temporary override valve may be manually operable to its override position. Movement of the temporary override valve to its override position may be controlled by a fluid pressure controlled actuator. The fluid pressure controlled actuator may include a latch to hold the temporary override valve in the override position without a continuous fluid pressure being present. Movement of the temporary override valve to its inactive position may be controlled by a second fluid pressure controlled actuator. Alternatively, the temporary override valve may be biased to its inactive position.

The temporary override valve may include a first port, a second port and a third port. The first port may be connected to the supply line and the third port may be connected to the immobiliser.

When the temporary override valve is in the override position, the first port may be connected to the third port. When the temporary override valve is in the inactive position, the second port may be connected to the third port.

The second port may be connected to a or the control line, or a modulator valve signalled by the control line, or the second port may be a vent.

The trailer braking system may include a park valve. The park valve may have a first position in which the immobiliser and / or spring brake control valve is connected to the supply line and a second position in which the supply line is blocked and the immobiliser and / or spring brake control are vented. The park valve may be operable to move automatically to the second position when the pressure in the supply line is below a threshold. The park valve may be connected to the supply line via the shunt valve.

The shunt valve may include a first inlet, a second inlet, an outlet, a manually operable button and a control port, wherein the first inlet may be connected to the supply line, the second inlet may be connected to a or the trailer reservoir, and the outlet may be connected to the spring brake control valve and the control port may be connected to the supply line.

The spring brake control valve may include an inlet, an outlet, an exhaust and a control port, wherein the inlet may be connected to the supply line and the outlet may be connected to the spring brake and the control port may be connected to the immobiliser.

The spring brake control valve may include a biasing element to bias the valve to a first position, in which the outlet may be connected to the exhaust, and the control port may be fluid pressure actuated so that when the required pressure is present at the control port the valve is urged to a second position in which the inlet may be connected to the outlet.

The immobiliser may include an inlet, an outlet and a control port, wherein the inlet may be connected to the supply line and the outlet may be connected to the control port of the immobiliser and the control port of the spring brake control valve.

The immobiliser may include a biasing element to bias the immobiliser to a first position, in which an internal check valve prevents fluid flowing to the outlet and, optionally the outlet may be connected to an exhaust, and the control port may be fluid pressure actuated so that when the required pressure is present at the control port the valve is urged to a second position in which the inlet may be connected to the outlet.

The trailer braking system may include an emergency braking override valve. The emergency braking override valve may include a first inlet and a second inlet, an outlet. The first inlet may be connected to the outlet of the immobiliser and the second inlet may be connected to the supply line, optionally via a trailer reservoir, and the outlet may be connected to the control ports of the immobiliser and the spring brake control valve.

The emergency braking override valve may include a biasing element to bias the valve to a first position, in which the first inlet connects to the outlet. The emergency braking override valve may be electrically operable to urge the valve against the biasing element to a second position, in which the second inlet may be connected to the outlet.

### BRIEF DESCRIPTION OF THE FIGURES

In order that the present invention may be more readily understood, preferable embodiments thereof will now be described, by way of example only, with reference to the accompanying drawings, in which:
FIGURE 1 is a schematic view of a trailer braking system;
FIGURE 2 is a schematic view of part of a trailer braking system;
FIGURES 3A and 3B are schematic views of parts of a trailer braking system in accordance with an embodiment;
FIGURES 4A and 4B are schematic views of parts of a trailer braking system in accordance with another embodiment; and.
FIGURES 5A and 5B are schematic views of parts of a trailer braking system in accordance with another embodiment

### DETAILED DESCRIPTION OF THE DISCLOSURE

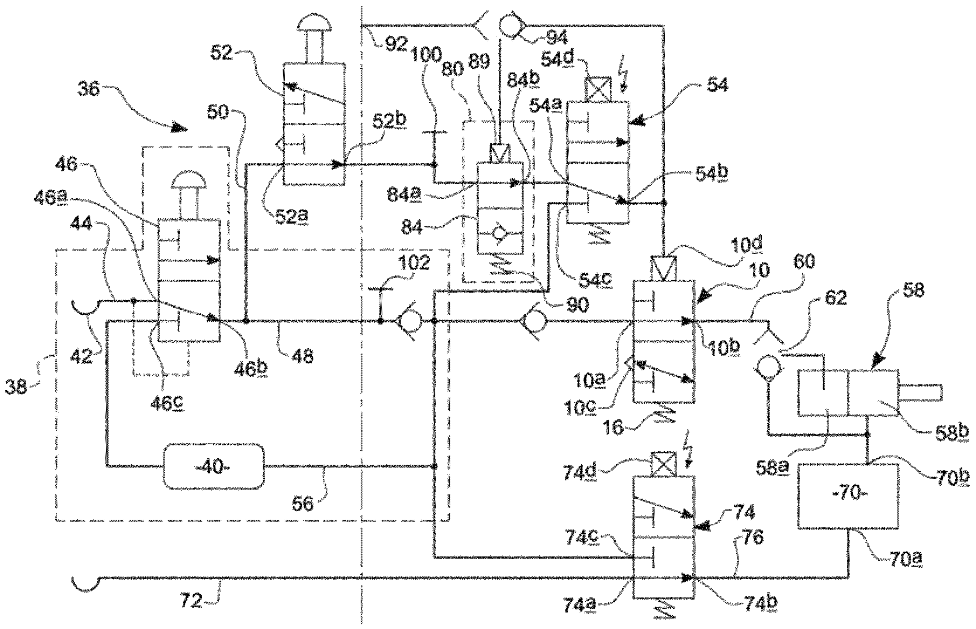

A braking system for a trailer vehicle is illustrated in figure 1. A brake actuator 58 is illustrated and has a spring brake chamber 58a and a service brake chamber 58b (both chambers are capable of imparting braking force on a connected wheel end). The spring brake (the braking force controlled by the spring brake chamber 58a) is applied when the fluid pressure (in this case, air) drops below a threshold and is released when the air pressure is at or above the threshold. In other words, the spring brake is on when there is low or no pressure in the chamber 58a and the spring brake is released (applying no braking force) when there is pressure present in the chamber 58a. The spring brake includes a resilient biasing element by means of which the braking force is applied when the pressure in the spring brake chamber 58a is below the predetermined level.

The service brake (the braking force controlled by the service brake chamber 58b) is applied according to the pressure present in the chamber 58b and is released when the air pressure is below a threshold. In other words, the service braking force developed is proportional to the pressure present in the chamber 58b.

The service brake is activated / released in accordance with driver (or electronic braking system (EBS)) demand. A control line 72 is connectable to the tractor and provides a fluid line to the driver's brake pedal. When the control line 72 is pressured (i.e. the driver has pressure applied to the brake pedal), a control valve assembly 70 (includes at least a modulator) operates to impart the desired pressure to the service brake chamber 58b (and, thus, the desired braking force is developed). The modulator has three configurations - a build state, a hold state and an exhaust state.

The build state is configured to increase the pressure delivered to the service brake chamber 58b. The hold state is configured to maintain a consistent pressure delivered. And, the exhaust state is configured to vent the pressure developed to atmosphere (and the delivered pressure to the chamber 58b drops to zero).

The modulator has a control port 70a for receipt of a fluid pressure braking demand signal (connected to the control line 72), a supply port (not shown) which is connected to a source of pressurised fluid, a delivery port 70b which is connected to the service brake chamber 58b, and an exhaust port (not shown) which vents to a low pressure region / atmosphere.

In the build state, the supply port is connected to the delivery port 70b whilst the exhaust port is closed (i.e. the pressure increases due to the connection to the supply port). In the hold state, the exhaust port and the supply ports are closed (i.e. the pressure is held stable with no additional pressure coming from the supply port). In the exhaust state, the delivery port 70b is connected to the exhaust port whilst the supply port is closed (i.e. the pressure will drop as all the air is vented).

Either the EBS or the driver (via the control line 72) can provide the control pressure at control port 70a of the control valve assembly 70 (along a service brake line 76). A brake apply valve 74 operates to connect either the control line 72 to the control valve assembly 70 or connects a constant supply of pressure from reservoir 40 to the control valve assembly 70. In this embodiment, the brake apply valve 74 is an electrically operated solenoid valve) and, in this example, is biased to connect the control line 72 to the control valve assembly 70). The brake apply valve 74 includes a first inlet 74a, an outlet 74b, a second inlet 74c and a control solenoid 74d. The control line 72 is connected to the first inlet 74a and the second inlet 74c is connected to the reservoir 40 via trailer reservoir supply line 56. The outlet 74b is connected to the control valve assembly 70.

The brake apply valve 74 is movable between a first position in which the first inlet 74a is connected to the outlet 74b, whilst the second inlet 74c is closed, and a second position in which the first inlet 74a is closed and the second inlet 74c is connected to the outlet 74b. The brake apply valve 74 is electrically operable, in this example, by means of a solenoid. Mechanical biasing means (in this example a spring) is provided to urge the brake apply valve 74 into the first position. Movement of the brake apply valve 74 from the first position to the second position is achieved by the supply of an electrical current to the solenoid 74d.

Thus, the driver demand pressure along the control line 72 is the default pressure delivered to the control valve assembly 70. However, the EBS can control the signal at port 74d in order to connect the trailer reservoir 40 the control valve assembly 70. This results in the EBS being operable to control the pressure going to the control valve assembly 70 - this is necessary so that the trailer can provide stability control automatically and independently of the driver demand for braking, for example.

The outlet 70b of the modulator 70 and an outlet from the spring brake control valve 10 are also connected to an anti-compounding valve 62. This is a two-way check valve which acts to connect whichever of the outlet of a spring brake control valve 10 (discussed below) or the outlet 70b of the modulator 70 is carrying the highest pressure to the spring brake chamber 58a. Such anti-compounding valves prevent the brakes being damaged by the simultaneous application of a braking force from the spring brake and service brake.

In embodiments, the spring brake control assembly includes a spring brake control valve 10. The spring brake control assembly may also include one or more of a park valve 52, a shunt valve 46 and an emergency braking override valve 54.

The spring brake control valve (SBCV) 10 operates to control the air pressure permitted to the spring brake chamber 58a. The SBCV 10 has an inlet 10a, an outlet 10b, an exhaust port 10c and a control port 10d. The inlet 10a connects to a source of pressurised fluid (coming via a shunt park assembly 38), the outlet 10b connects to the spring brake chamber 58a (via a spring brake line 60), and the exhaust port 10c is connected to a low pressure region (e.g. atmosphere).

The spring brake control valve 10 is movable between a first position where the inlet 10a is connected to the outlet 10b whilst the exhaust port 10c is closed, and a second position in which the outlet 10b is connected to the exhaust port 10c whilst the inlet 10a is closed.

The control port 10d is a fluid pressure operated actuator. The fluid pressure operated actuator being configured such that the supply of pressurised fluid to the control port 10d causes the spring brake control valve 10 to move to its first position. The spring brake control valve 10 also has a resilient biasing element 16 (e.g. a spring) which acts to urge the spring brake control valve 10 into its second position. When the fluid pressure at the control port 10d exceeds a pre-determined level / threshold, the spring brake control valve 10 moves positions, against the biasing force of the resilient biasing element 10, from the second position to the first position.

The inlet 10a is connected to the supply line 44. In this example, the inlet 10a of the spring brake control valve 10 is also connected to the pressurised fluid reservoir 40 and the supply line 44 (via connector 42) which connects to pressurised fluid supply from a tractor / towing vehicle. The inlet 10a of the spring brake control valve 10 is connected to the connector 42 via a supply line 44 which extends from the connector 42 through the shunt valve 46 to an emergency apply line 48 and a park line 50.

The emergency apply line 48 extends to the inlet 10a of the spring brake control valve 10, whilst the park line 50 extends through a park valve 52 (in the example in figure 1, the park valve 52 is manually operable but other park valve examples may have automatic or partially automatic operation) and an electrically operable emergency braking override valve 54 to the control port 10d.

Two one-way check valves are provided in the emergency apply line 48, both being oriented to allow flow of fluid from the shunt valve 46 to the spring brake control valve 10 but to prevent flow of fluid in the other direction along the emergency apply line 48, i.e. away from the spring brake control valve 10.

A trailer reservoir supply line 56 extends from the emergency apply line 48 in between the two one-way check valves to a pressurised fluid reservoir 40 mounted on the trailer. An outlet from the trailer reservoir 40 is connected to the shunt valve 46.

The shunt valve 46 includes a first inlet 46a, a second inlet 46c, an outlet 46b. The first inlet 46a is connected to the supply line 44, the second inlet 46c is connected to the reservoir 40 and the outlet 46b is connected to the inlet 10a of the SBCV 10. The shunt valve 46 has a first position in which the first inlet 46a is connected to the outlet 46b whilst the second inlet 46c is closed, and a second position in which the first inlet 46a is closed and the second inlet 46c is connected to the outlet 46b. In this example, the shunt valve 46 is adapted to be moved manually to the second position (also referred to as an activated position) and automatically moves back to its first position (also referred to as an inactive position) when the supply line 44 is reconnected to a supply of pressure.

In other words, when the shunt valve 46 is in the activated position, the trailer reservoir 40 is connected directly or indirectly to the spring brake control valve 10. In embodiments where an immobiliser 80 is present (discussed further below), the shunt valve 46 may connect to the SBCV 10 via the immobiliser 80. When the shunt valve 46 is in the deactivated position, the supply line 44 is connected to directly or indirectly to the spring brake control valve 10 (again potentially through the immobiliser 80 if there is one present).

The park valve 52 includes an inlet 52a, an outlet 52b and an exhaust. The inlet 52a connects to the supply line 44 (in this embodiment, connects after the shunt valve 46, to emergency apply line 48). The outlet 52b connects to the control port 10d of the SBCV 10 via an immobiliser 80 and the emergency braking override valve 54 (both described in more detail below). The park valve 52 has a first position in which the inlet 52a is connected to the outlet 52b and a second position in which the inlet 52a is closed and the outlet 52b vents to a low pressure region (e.g. atmosphere). In this example, the park valve 52 is adapted to be moved manually between the first and second positions. The emergency braking override valve 54 also has a first and second inlet 54a, 54c, and an outlet 54b. The first inlet 54a is connected to the park valve 52 (specifically, the outlet 52b). The second inlet 54c is connected to the emergency apply line 48 between the two one-way check valves. The outlet 54b is connected to the control port 10d of the spring brake control valve 10.

The emergency braking override valve 54 has a first position in which the inlet 54a is connected to the second port 54b, and the third port 54c is closed, and a second position in which the second inlet 54c is connected to the outlet 54b whilst the first inlet 54a is closed.

The emergency braking override valve 54 is electrically operable, in this example, by means of a solenoid 54d. Mechanical biasing means (in this example a spring) is provided to urge the emergency braking override valve 54 into the first position. In other words, the emergency braking override valve 54 is biased to its first position when there is no signal provided at the solenoid 54d. Movement of the emergency braking override valve 54 from the first position to the second position is achieved by the supply of an electrical current to the solenoid 54d.

The supply of electrical power to the emergency braking override valve 54 and the brake apply valve 74 is provided by a control unit (e.g. the trailer EBS control unit).

The immobiliser 80 is configured to prevent the trailer from rolling when it is disconnected from a towing vehicle. In general terms, the immobiliser 80 operates to move to an immobilise position automatically when pressure in the supply line 44 is lost (and the rest of the system vents, including the SBCV 10). Thus, the spring brake moves to a brake applied position and the immobiliser 80 also moves to the "immobilised" state when the pressure is lost in the supply line 44.

In more detail, the immobiliser 80 includes / is provided by an immobiliser valve 84. The immobiliser valve 84 has an inlet 84a, an outlet 84b and a control port 89. A resilient biasing element 90 (e.g. a spring) is provided to urge the immobiliser valve 84 to a default position when the control port 89 is not in use. The inlet 84a is connected to the supply line 44 via the shunt and park valves 46, 52. The outlet 84b is connected to the control port 10d of the SBCV 10 via the emergency braking override valve 54. The control port 89 is a fluid pressure operated actuator. The outlet 84b is also connected to the control port 89 via the emergency braking override valve 54.

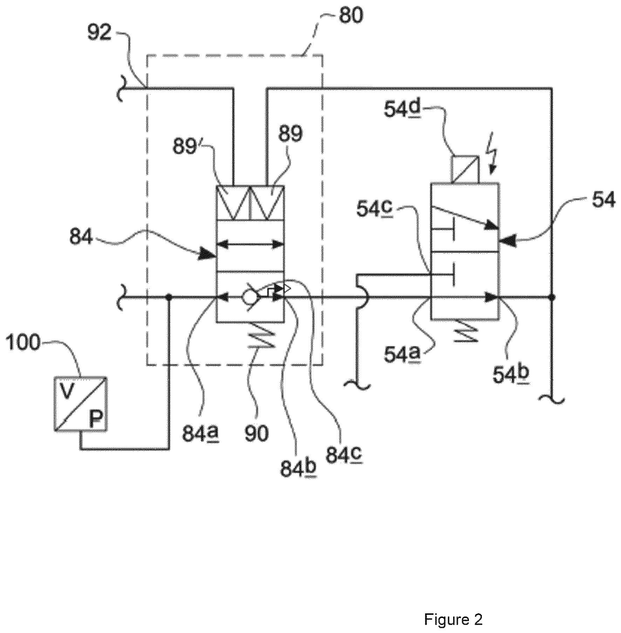

The immobiliser 80 has two states - a brake apply / active immobilisation state and a brake release / inactive state. These states / positions which positions control the flow of pressurised fluid to the spring brake control valve 10. The state illustrated in figure 2 is the inactive state in which the immobiliser 80 does not interfere or change the normal operation of the SBCV 10. The inlet 84a is connected to the outlet 84b - and thus, the supply line 44 pressure is permitted to flow to the control port 10d of the SBCV 10. However, when the supply line 44 is connected to a low pressure region, the immobiliser 80 automatically moves to its immobilise position in which the spring brake control valve 10 is not operable.

In the second state (the immobilisation state), the inlet 84a is connected to the outlet 84b via an internal check-valve. This prevents pressure on the supply line 44 from reaching the control port 10d of the SBCV 10 (and, thus, the spring brake cannot function to allow pressure through to the spring brake chamber 58a because the SBCV 10 is biased to vent by default). Furthermore, the biasing element 90 urges the immobiliser 80 to its immobilisation state, so once there is no fluid on the outlet 84b side of the valve, the immobiliser 80 cannot be repressurised merely by connecting the supply line 44 to a source of fluid.

In some embodiments, the line connected to the control port 89 of the immobiliser valve 84 includes a two-way check-valve 94. The check-valve 94 has two inlets and a single outlet, which operates automatically to allow the inlet with the larger pressure present to pass the pressure on to the outlet. One inlet is connected to the outlet 84b of the immobiliser valve 84 (as discussed above) and the other is connected to a port 92. Port 92 can be connected to an external source of fluid pressure - thus, a manual external input could be used to pressure the immobiliser valve 84 to its released state.

An alternative immobiliser 80 is illustrated in figure 2. The difference in this system is there is no double check valve connecting to the control 89 of the immobiliser valve 84. Instead, the immobiliser valve 84 is provided with two fluid pressure operated actuators 89, 89'. The first fluid pressure operated actuator 89 is connected as before (to the outlet 84b of the immobiliser valve 84 and, thus, to the control port 10d of the spring brake control valve 10) and operates in exactly the same way as above. In other words, it pushes the immobiliser valve 84 against the biasing force of the spring 90 into its brake release position when pressure is present at the control port 10d of the SBCV 10 / outlet 54b of the emergency braking override valve 54.

The second fluid pressure operated actuator 89' is connected to an alternative source of pressurised fluid via port 92 in the same way as is the second inlet of the two-way check valve 94 in system discussed above. The second fluid pressure operated actuator 89' is configured to move the immobiliser valve 84 against the biasing force of the spring 90 into its brake release position when the pressure of fluid from the alternative source of pressurised fluid exceeds a pre-determined amount.

In some embodiments, the port 92 (connected to the control port 89' or the check valve 94) is connected to the delivery port 70b of the service braking valve assembly / modulator 70.

It should be appreciated that the system illustrated in figure 2 includes the same system components as discussed in relation to figure 1 (apart from the check-valve as discussed) but are not shown explicitly in figure 2.

It should also be appreciated that the immobiliser valve 84 may include an exhaust port attached to the check-valve 84c provided between the inlet 84a and the outlet 84b. Thus, when the immobiliser 80 moves to the active immobilisation state, the pressure on the outlet 84b side of the immobiliser valve 84 may automatically vent (and not be able to repressurise until the immobiliser 80 is operated to change states again). This is shown in figure 2.

The ability to shunt a trailer when it is disconnected from a towing vehicle may be particularly important. Shunting a trailer involves moving it only a small distance (e.g. across a warehouse or trailer yard or embarking or alighting a boat / ferry) and is often used to repark a trailer in a desired position in a yard after a towing vehicle has delivered a trailer to a different position in the yard and departed.

As mentioned above, a shunt valve 46 may be provided. As discussed above, the shunt valve 46 is manually operable to move it to its second position to connect the trailer reservoir 40 to the park line 50 / the immobiliser 80 (or if no immobiliser 80 is present, the SBCV 10). However, there is an issue with this operation if the operators completing the shunt operations do not or are unable to manually activate the shunt valve 46. In such a case, the trailer may be dragged without releasing the spring brake (and, thus, damage to the braking system is possible). The present invention provides a temporary override valve 200 that can be activated by a driver or other operator before or when the trailer is disconnected from a towing vehicle / parked in an initial drop off location. The temporary override valve 200 allows (fluid in) the supply line to be connected to the spring brake control valve 10 automatically when the supply line 44 is connected to a source of pressurised fluid. This provides an alternative shunt functionality that preserves the health of the braking system if the trailer is moved with only a connection to the supply line 44. The temporary override valve 200 is discussed in more detail below.

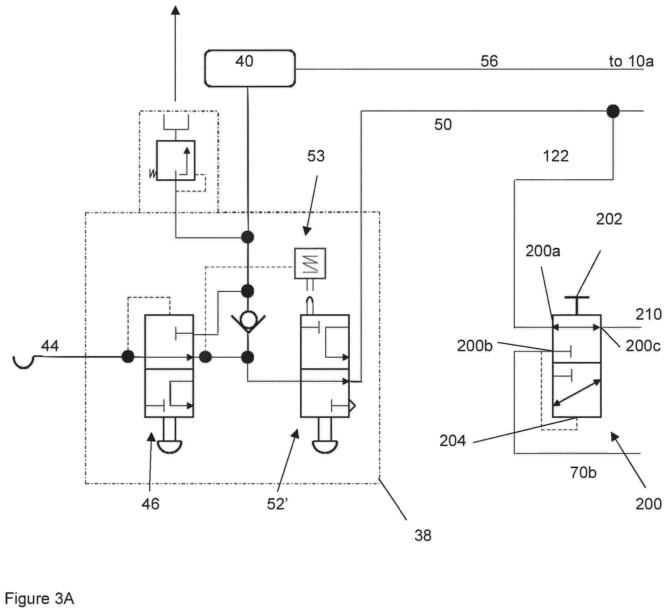

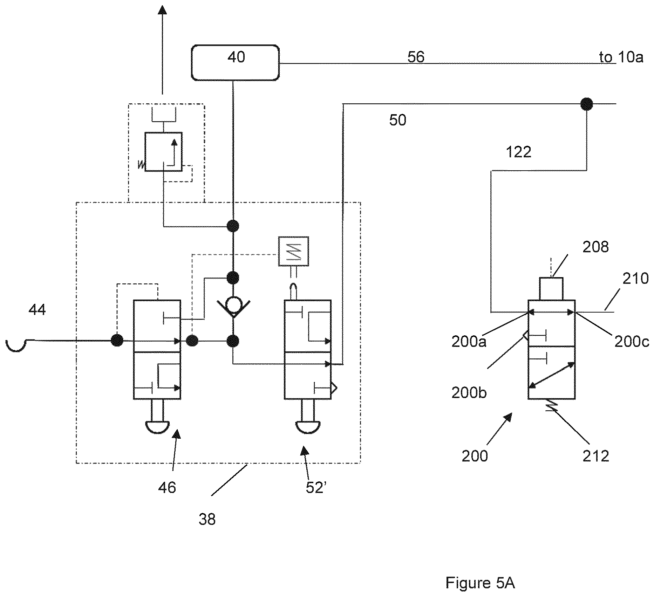

As shown in figures 3A to 5B, a trailer braking system including a temporary override valve 200 is shown. The temporary override valve 200 has an override position and an inactive position. When the temporary override valve 200 is in the override position, the immobiliser 80 remains in the immobilise position and the spring brake remains in the apply position when the supply line 44 is unpressured (i.e. unconnected to a supply of fluid). However, on connection to a supply, the immobiliser 80 is moved to its brake release position and the supply line 44 is connected to the spring brake control valve 10 automatically (i.e. when the supply line 44 is connected to a source of fluid). In other words, both the actions of the immobiliser 80 and the SBCV 10 are automatic on pressurisation from a connection to the supply line 44. Thus, the spring brake 58b is moved to the release position automatically.

In embodiments, when the temporary override valve 200 is in the inactive position, the immobiliser 80 is operable to move both to the brake release position (i.e. the position in which the spring brake control valve 10 is operable normally to cause the flow of pressurised fluid into the spring brake 58b or to vent the spring brake chamber 58b as necessary depending on the system and pressure in the braking system) and to the immobilise position (i.e. the position in which the spring brake control valve 10 is not operable irrespective of the whether the supply line 44 is pressurised / the supply line 44 is connected to a source of fluid). In other words, when the temporary override valve 200 is inactive, the remaining braking system components operate as they normally would as none of the connections from the temporary override valve 200 (in the inactive state) causes changes to the normal operation. Thus, the immobiliser 80, the SBCV 10, the emergency braking override vale 54, etc. all operate between their respective states with no interference from the temporary override valve 200. This is discussed further below where the use of the system is outlined.

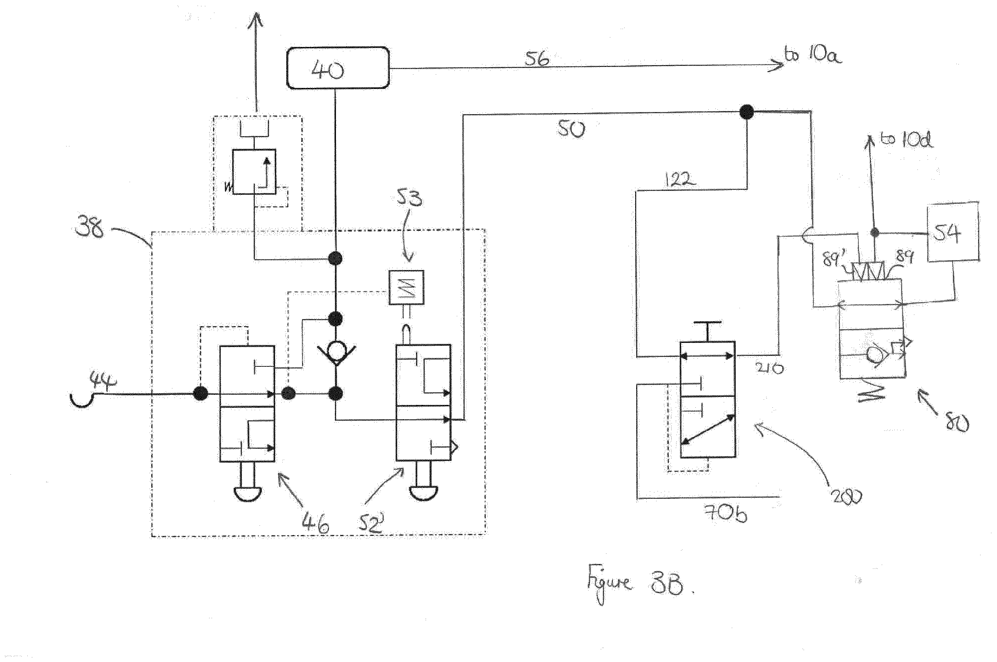

In some embodiments, the temporary override valve 200 includes a first port 200a, a second port 200b and a third port 200c. In some embodiments, the first port 200a is connected to the supply line 44 (via park line 50 and a first override line 122) and the third port 200c connects to second override line 210. second override line 210 connects to the immobiliser 80. The third port 200c connects to the control port 89' of the immobiliser 80 (see figure 3B).

When the temporary override valve 200 is in the override position (as shown in figure 3A and 3B), the first port 200a is connected to the third port 200c. In other words, the temporary override valve 200 connects the park line 50 (and, thus, the supply line 44) to the control port 89' of the immobiliser 80. Thus, when the supply line 44 is pressured, the immobiliser 80 is automatically moved to its brake release position.

In embodiments, the second port 200b connects to the delivery port 70b of the service brake valve assembly 70 (which is only pressurised when there is a service braking demand generated by either the brake pedal in the towing vehicle or the trailer EBS generating its own service brake demand via the brake apply valve 74). It should be appreciated that the second port 200b could be connected to the control line 72. In more general terms, the temporary override valve 200 is connected to the service brake demand pressure.

When the temporary override valve 200 is in the inactive position, the second port 200b is connected to the third port 200c. In other words, the control of the immobiliser 80 is from the service brake demand (and usually unpressured) - meaning the immobiliser 80 is in its immobilise position. Thus, if the supply line 44 is connected to a supply of pressure, the immobiliser 80 must be released before fluid can reach the spring brake control valve 10 (and release the spring brakes).

In some embodiments, movement of the temporary override valve 200 to its inactive position is controlled by a fluid pressure controlled actuator 204. In some embodiments (see figures 3A and 3B), movement of the temporary override valve 200 to its inactive position is controlled by pressure in the delivery port 70b of the service brake modulator 70 or the control line 72. In this case, when the delivery port 70b / control line 72 is pressurised, the temporary override valve 200 is forced to its inactive position. Thus, the delivery port 70b or control line 72 is connected to the immobiliser 80 (at the control port 89').

In some embodiments, the temporary override valve 200 is manually operable to its override position. In other words, a button or handle 202 is provided and a user/driver/operator can move the temporary override valve 200 to its override position.

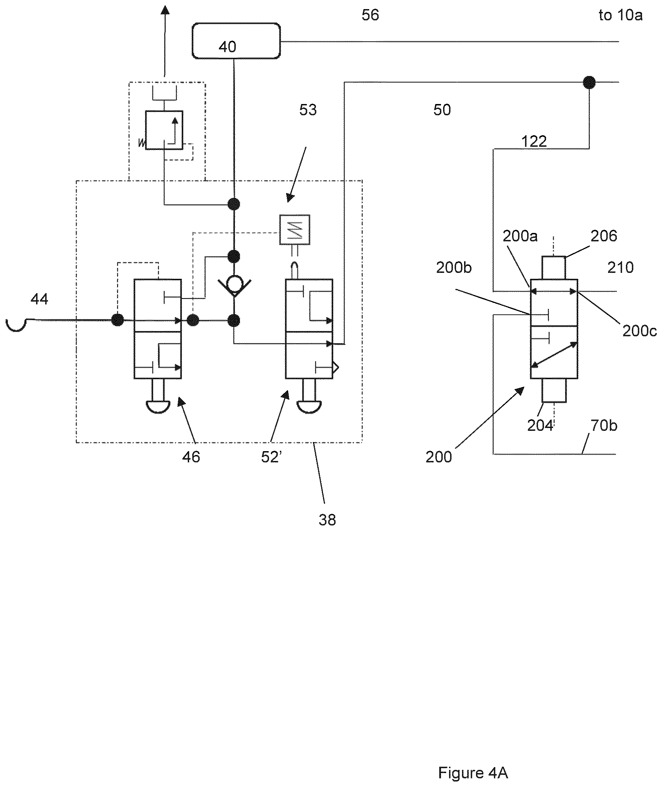

Alternatively (see figures 4A to 5B), the movement of the temporary override valve 200 to its override position is controlled by either an electrical signal or a fluid pressure controlled / pneumaticsignal (an actuator is shown by references 206 and 208). This signal may be generated by a signal from the EBS control unit or other control directly from an operator elsewhere. For example, a driver may cause the signal to be sent when the vehicle is parked up, prior to uncoupling the tractor ready for loading of the trailer onto a ship by pressing a button in the cab or elsewhere.

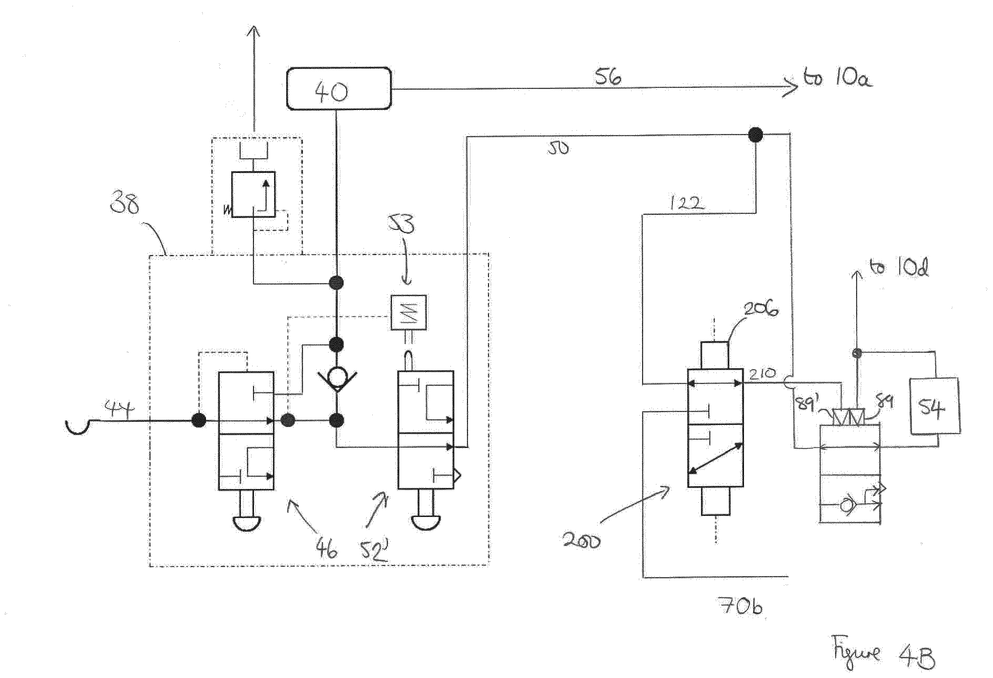

The temporary override valve 200 illustrated in figures 4A and 4B, include two such actuators that operate the valve 200 in both directions. In other words, the valve 200 can be moved to either position by an electric or pneumatic actuator.

In some embodiments, the fluid pressure controlled actuator 208 includes a latch to hold the temporary override valve 200 in the override position without a continuous signal being provided (i.e. a consistent fluid pressure or constant power for an electrical signal is not required). In such a configuration, the temporary override valve 200 may be biased to its inactive position (by biasing element 212). Thus, when the latch is deactivated, the temporary override valve 200 is moved to its inactive position automatically.

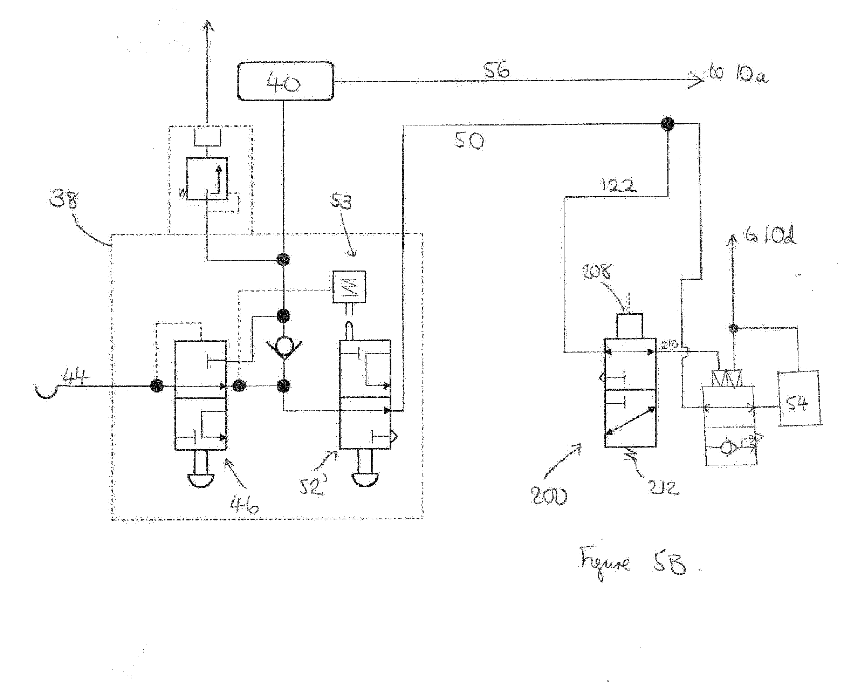

In some embodiments, the second port 200b is a vent, so when the temporary override valve 200 is in its inactive position, then line 210 is connected to a vent port (see figure 5A and 5B). This allows for an immobiliser 80 that is only activated by an electric signal (i.e. only the EBS can move it to its brake release position in "normal" operation) - this is discussed more below.

The manner in which the system operates will now be discussed.

Under normal driving conditions, the connector 42 is pressurised by virtue of its connection to "the red line", i.e. the tractor based supply of pressurised fluid, and the shunt valve 46, park valve 52 and emergency braking override valve 54 are all in their first positions, as illustrated in the figure 1. The immobiliser 80 is in its brake release position (also as illustrated in figure 1). As a result, the control port 10d is connected to the connector 42 and is therefore pressurised, and, the spring brake control valve 10 is also in its first position. Pressurised fluid can therefore flow from the source of pressurised fluid 38, along the emergency apply line 48, and into the spring brake chamber 58a to release the spring brakes.

When the trailer is left without a towing vehicle, the connector 42 is disconnected from the external source of pressurised fluid and the supply line 44 thus exhausted to atmosphere. In the absence of pressurised fluid at the control port 10d of the spring brake control valve 10, the spring brake control valve 10 moves to its second (default / unpressurised) position. As a result, the inlet 10a is closed, and the outlet 10b is connected to the exhaust port 10c. The spring brake chamber 58a is thus vented to atmosphere via the exhaust port 10c, and the spring brake applied.

Further, when the connector 42 is disconnected from the supply of fluid from the towing vehicle, pressure is also lost at the control port 89 of the immobiliser valve 84 and the immobiliser 80 automatically moves to its active / immobilisation state. Thus, the trailer is automatically immobilised with the spring brakes applied.

The same state can be achieved without disconnecting the towing vehicle, by manually actuating the park valve 52, 52'. The button is manually pulled outwards and the park valve 52 moves to its second position in which the park line 50 is connected to atmosphere. The park line 50 vents and the pressure is lost and resulting in the both the control port 10d of the SBCV 10 and the control port 89 of the immobiliser valve 84 losing pressure and moving to their default / biased positions.

In embodiments of the system that include a park valve 52', the park valve 52' will also automatically move to its second position and vent the connection to the immobiliser 80 and the SBCV 10 when pressure is lost in the supply line 44. In this example (see figures 3A to 5B), the park valve 52' has the same ports and is configured to provide the same positions as discussed above but the actuation is different (thus the reference number is provided with a prime symbol (') to indicate this difference). The park valve 52' provides an automatic parking functionality - the positions of the park valve 52' is controlled by pressure in the supply line (between the shunt valve 46 and the park valve 52'). A spring actuator 53 is provided (which is connected to the output of the shunt valve 46) which acts to move the park valve 52' depending on the pressure present. When the pressure is below a threshold, the actuator 53 moves the park valve 52' to its second position, which prevents pressure moving towards the immobiliser 80 and vents the immobiliser 80 (via the park line 50).

In other words, the park valve 52' will only maintain its first position if there is pressure in the supply line 44. The park valve 52' includes a manually operable button to manually move the valve 52'.

However, it should be appreciated that this system is safe even without a park valve 52', 52 (i.e. the trailer will not roll away and the spring brakes remain on even with use of the temporary override valve 200 until a supply of pressure is supplied on the supply line 44).

Once the trailer is parked and disconnected (i.e. when the trailer is in a yard or the like without a towing vehicle), a "shunt" operation can be used to move the trailer short distances when the supply line 44 is not connected to the trailer. This shunt functionality of facilitated by the trailer's own reservoir 40. The shunt functionality is designed to allow the spring brakes to be released while the trailer is moved but once left again the trailer will default back to its parked (and in this example, immobilised state). The shunt valve 46 is manually operable to provide a "shunt state" in the trailer. The manually operable button is pushed inwards to move the shunt valve 46 to its second position where the trailer reservoir 40 is connected to the park line 50. It should be appreciated that, in this example, the shunt valve 46 is only operable to move to its activated position when the supply line 44 is disconnected and / or the fluid pressure in the supply line 44 is below a threshold. Once pressure is in the supply line 44, the shunt valve 46 is forced back to its deactivated position.

It should be appreciated that the shunt valve 46 does not assist in a situation in which the trailer will be connected to a supply line 44 source of pressure before being moved (as is often the case in ports when the trailer is positioned on a boat). The temporary override valve 200 allows an operator to set a temporary state in which the trailer can be connected by a normal supply line from another towing vehicle for the purposes of these small movements when they know that such a movement will be necessary (e.g. on arrival at a port). However, the temporary override valve 200 can be left inactive when a trailer is left. In such a situation the immobiliser 80 will operate in the normal way to prevent the spring brakes from being pressurised and the trailer being movable when it is unsafe to do so.

In other words, in some facilities (e.g. ports), the trailers must be moved but the manual shunt valve 46 is not used. The present invention provides a mechanism to allow this while still maintaining a safe system.

When the trailer is dropped at such a facility, the driver / operator activates the temporary override valve 200. This connects the supply line 44 to the immobiliser 80 (at the control port 89'). While the trailer is unconnected from any supply of pressurised fluid, the immobiliser 80 and SBCV 10 will maintained their biased states (e.g. immobilised and brake applied respectively) and the spring brake remains applied (and the trailer doesn't roll away).

When the port operator wants to move the trailer, the supply line 44 is connected to a supply of fluid. As the temporary override valve 200 is active, the pressurised fluid flows to the control port 89' of the immobiliser 80 (and the immobiliser 80 is released). Further, the pressurised fluid flows to the SBCV 10 (control port 10d and inlet 10a), so that the spring brakes are released. Thus, the trailer can be moved without the spring brake applied and wheels and brakes are not damaged by dragging the trailer.

As discussed above, there are multiple alternatives provided for moving the temporary override valve 200 to its inactive state. These are provided so that the trailer braking system will return to "normal" as soon as a towing vehicle is connected / the trailer is being prepared for a normal journey (i.e. being towed on roads rather than being loaded onto a boat or the like).

On reconnection to a towing vehicle, the following occurs to prepare the trailer for departure. Both the supply and control lines 44, 72 are connected to the towing vehicle - thus, the supply line 44 becomes pressurised. The temporary override valve 200 may be moved to its inactive position automatically by a signal from the EBS. Or, a service brake demand (present at the delivery port 70b or control line 72) may change the positions of the temporary override valve 200. This depends on the actuation mechanism of the temporary override valve 200 (as discussed above).

The supply line 44 is now connected to the immobiliser control port 89', so the immobiliser 80 stays in its brake release position ready for onward travel.

Alternatively, if the temporary override valve 200 is not connected to the service brake demand signal, then the EBS is in control of its position. If the temporary override valve 200 is maintained in the active position then the supply line 44 connects to the control port 89' of the immobiliser 80 and the immobiliser 80 is released as above. However, if the temporary override valve 200 is switched to inactive prior to supply line 44 connection then the immobiliser 80 must be released in the "normal manner". In other words, once the tractor / trailer is ready to release the immobiliser 80, the control unit of the EBS provides a signal to the emergency braking override valve 54 (specifically a pulse to the solenoid 54d). The emergency braking override valve 54 connects the trailer reservoir 40 to the control port 89 of the immobiliser valve 84 (and the control port 10d of the SBCV 10). This allows both the immobiliser 80 and the SBCV 10 to move to their respective brake release positions and the supply line 44 pressure is permitted through to the SBCV 10 (and the spring brake chamber 58a) and the spring brakes are released.

Thus, when the trailer (and the fluid lines 44, and 72) are disconnected, the temporary override valve 200 will remain in the position it was in when the operator left it. However, once back to driving normally the temporary override valve 20 does not affect the operation of the trailer braking system. Furthermore, in systems that include an immobiliser 80, the operator is free to use the immobilisation functionality at other times when the trailer will not be shunted in the way described above (i.e. with just the supply line 44 connected to a source of pressurised fluid).

## Claims

1. A trailer braking system including:
a supply line (44) for connection to a continuous source of pressurised fluid;
a trailer reservoir (40) for storing a volume of pressurised fluid;
a spring brake, which has an apply position and a release position, and the spring brake moves to the release position when pressurised fluid is provided at or above a threshold;
a spring brake control valve (10), which controls the flow of fluid to the spring brake;
an immobiliser (80) having a brake release position and an immobilise position, which control the flow of pressurised fluid to the spring brake control valve (10),
a temporary override valve (200) having an override position and an inactive position, and being operable to move between positions independently of the pressure in the supply line (44); wherein when the temporary override valve (200) is in the override position, the immobiliser (80) remains in the immobilise position and the spring brake remains in the apply position when the supply line (44) is unpressured and, the immobiliser (80) is moved to its brake release position and the supply line (44) is connected to the spring brake control valve (10) automatically when the supply line (44) is connected to a source of fluid, such that the spring brake is moved to the release position.

2. A trailer braking system according to claim 1 wherein when the temporary override valve (200) is in the inactive position, the immobiliser (80) is operable to move both to the brake release position, in which the spring brake control valve (10) is operable to cause the flow of pressurised fluid into the spring brake or to vent the spring brake chamber (58a), and to the immobilise position, in which the spring brake control valve (10) is not operable and / or
including a shunt valve (46) having an activated position and a deactivated position; wherein when the shunt valve (46) is in the activated position, the trailer reservoir (40) is connected directly or indirectly to the spring brake control valve (10), and when the shunt valve (46) is in the deactivated position, the supply line (44) is connected to directly or indirectly to the spring brake control valve (10) and optionally,
wherein the shunt valve (46) is moved to its deactivated position when the supply line (44) is connected to a source of pressurised fluid.

3. A trailer braking system according to any one of the preceding claims including a control line (72) for connection to a source of pressurised fluid when there is a braking demand, and optionally
wherein movement of the temporary override valve (200) to its inactive position is controlled by a service brake demand pressure, optionally from a delivery port (70b) of a valve brake assembly / modulator (70) or from the control line (72).

4. A trailer braking system according to any one of the preceding claims wherein the temporary override valve (200) is manually operable to its override position.

5. A trailer braking system according any one of claims 1 to 3 wherein movement of the temporary override valve (200) to its override position is controlled by a fluid pressure controlled actuator (206).

6. A trailer braking system according to claim 5 wherein the fluid pressure controlled actuator (204) includes a latch to hold the temporary override valve (200) in the override position without a continuous fluid pressure being present and / or optionally
wherein movement of the temporary override valve (200) to its inactive position is controlled by a second fluid pressure controlled actuator (204), or alternatively
wherein the temporary override valve (200) is biased to its inactive position.

7. A trailer braking system according to any one of the preceding claims wherein the temporary override valve (200) includes a first port (200a), a second port (200b) and a third port (200c), and optionally,
wherein the first port (200a) is connected to the supply line (44) and the third port (200c) is connected to the immobiliser (80), and optionally,
wherein when the temporary override valve (200) is in the override position, the first port (200a) is connected to the third port (200c) and when the temporary override valve (200) is in the inactive position, the second port (200b) is connected to the third port (200c).

8. A trailer braking system according to claims 11 to 13, wherein the second port (200b) is connected to a / the delivery port (70b) or a / the control line (72) or the second port (200b) is a vent.

9. A trailer braking system according to any one of the preceding claims including a park valve (52) which has a first position in which the immobiliser (80) and / or spring brake control valve (10) is connected to the supply line (44) and a second position in which the supply line (44) is blocked and the immobiliser (80) and / or spring brake control valve (10) is vented, and optionally,
wherein the park valve (52) is operable to move automatically to the second position when the pressure in the supply line (44) is below a threshold.

10. A trailer braking system according to claim 9 and directly or indirectly on claim 2 wherein the park valve (52) is connected to the supply line (44) via the shunt valve (46).

11. A trailer braking system according to any one of the preceding claims 2 to 10 wherein the shunt valve (46) includes a first inlet (46a), a second inlet (46c), an outlet (46b), a manually operable button and a control port, wherein the first inlet (46a) is connected to the supply line (44), the second inlet (46c) is connected to a or the trailer reservoir (40), and the outlet (46b) is connected to the spring brake control valve (10) and the control port is connected to the supply line (44).

12. A trailer braking system according to any one of the preceding claims wherein the spring brake control valve (10) includes an inlet (10a), an outlet (10b), an exhaust (10c) and a control port (10d), wherein the inlet (10a) is connected to the supply line (44) and the outlet (10b) is connected to the spring brake and the control port (10d) is connected to the immobiliser (80), and optionally,
wherein the spring brake control valve (10) includes a biasing element (16) to bias the valve (10) to a first position, in which the outlet (10b) is connected to the exhaust (10c), and the control port (10d) is fluid pressure actuated so that when the required pressure is present at the control port (10d) the valve (10) is urged to a second position in which the inlet (10a) is connected to the outlet (10b).

13. A trailer braking system according to any one of the preceding claims wherein the immobiliser (80) includes an inlet (84a), an outlet (84b) and a control port (89), wherein the inlet (84a) is connected to the supply line (44) and the outlet (84b) is connected to the control port (89) of the immobiliser (80) and the control port (10d) of the spring brake control valve (10), and optionally,
wherein the immobiliser (80) includes a biasing element (90) to bias the immobiliser (80) to a first position, in which an internal check valve (94) prevents fluid flowing to the outlet (84b) and, optionally the outlet (84b) is connected to an exhaust, and the control port (89) is fluid pressure actuated so that when the required pressure is present at the control port (89) the valve is urged to a second position in which the inlet (84a) is connected to the outlet (84b).

14. A trailer braking system according to claim 13 including an emergency braking override valve (54) including a first inlet (54a) and a second inlet (54c), an outlet (54b), wherein the first inlet (54a) is connected to the outlet (84b) of the immobiliser (80) and the second inlet (84c) is connected to the supply line (44), optionally via a trailer reservoir (40), and the outlet (54b) is connected to the control ports (89, 10d) of the immobiliser (80) and the spring brake control valve (10) and optionally, wherein the emergency braking override valve (54) includes a biasing element to bias the valve (54) to a first position, in which the first inlet (54a) connects to the outlet (54b), and is electrically operable to urge the valve (54) against the biasing element to a second position, in which the second inlet (54c) is connected to the outlet (54b).

15. A trailer including a trailer braking system according to any one of claims 1 to 14 or a method of operating the trailer braking system including any of the features of claims 1 to 14.

## Patentansprüche

1. Anhängerbremssystem, beinhaltend:
eine Versorgungsleitung (44) für den Anschluss an eine kontinuierliche Druckfluidquelle;
ein Anhängerreservoir (40) zum Speichern eines Druckfluidvolumens;
eine Federbremse, die eine Betätigungsposition und eine Löseposition aufweist, wobei sich die Federbremse in die Löseposition bewegt, wenn Druckfluid bei oder oberhalb einer Schwelle bereitgestellt wird;
ein Federbremssteuerventil (10), das den Fluidfluss zu der Federbremse steuert;
eine Wegfahrsperre (80), die eine Bremsenlöseposition und eine Wegfahrsperrposition aufweist, die den Fluss von Druckfluid zu dem Federbremssteuerventil (10) steuern,
ein temporäres Übersteuerungsventil (200), das eine Übersteuerungsposition und eine inaktive Position aufweist und betätigbar ist, um sich unabhängig von dem Druck in der Versorgungsleitung (44) zwischen Positionen zu bewegen; wobei, wenn sich das temporäre Übersteuerungsventil (200) in der Übersteuerungsposition befindet, die Wegfahrsperre (80) in der Wegfahrsperrposition bleibt und die Federbremse in der Betätigungsposition bleibt, wenn die Versorgungsleitung (44) nicht druckbeaufschlagt ist, die Wegfahrsperre (80) in ihre Bremsenlöseposition bewegt wird und die Versorgungsleitung (44) automatisch mit dem Federbremssteuerventil (10) verbunden wird, wenn die Versorgungsleitung (44) mit einer Fluidquelle verbunden ist, so dass die Federbremse in die Löseposition bewegt wird.

2. Anhängerbremssystem nach Anspruch 1, wobei, wenn sich das temporäre Übersteuerungsventil (200) in der inaktiven Position befindet, die Wegfahrsperre (80) betätigbar ist, um sich sowohl zu der Bremsenlöseposition zu bewegen, in der das Federbremssteuerventil (10) betätigbar ist, um den Fluss von Druckfluid in die Federbremse zu bewirken oder um die Federbremskammer (58a) zu entlüften, als auch in die Wegfahrsperrposition, in der das Federbremssteuerventil (10) nicht betätigbar ist, und/oder
beinhaltend ein Shuntventil (46), das eine aktivierte Position und eine deaktivierte Position aufweist; wobei, wenn sich das Shuntventil (46) in der aktivierten Position befindet, das Anhängerreservoir (40) direkt oder indirekt mit dem Federbremssteuerventil (10) verbunden ist, und wenn sich das Shuntventil (46) in der deaktivierten Position befindet, die Versorgungsleitung (44) direkt oder indirekt mit dem Federbremssteuerventil (10) verbunden ist, und optional,
wobei das Shuntventil (46) in seine deaktivierte Position bewegt wird, wenn die Versorgungsleitung (44) mit einer Druckfluidquelle verbunden wird.

3. Anhängerbremssystem nach einem der vorhergehenden Ansprüche, beinhaltend eine Steuerleitung (72) für den Anschluss an eine Druckfluidquelle, wenn ein Bremsbedarf besteht, und optional,
wobei eine Bewegung des temporären Übersteuerungsventils (200) in seine inaktive Position von einem Betriebsbremsbedarfsdruck, optional aus einer Abgabeöffnung (70b) einer/eines Ventilbremsanordnung/-modulators (70) oder aus der Steuerleitung (72), gesteuert wird.

4. Anhängerbremssystem nach einem der vorhergehenden Ansprüche, wobei das temporäre Übersteuerungsventil (200) manuell in seine Übersteuerungsposition betätigbar ist.

5. Anhängerbremssystem nach einem der Ansprüche 1 bis 3, wobei eine Bewegung des temporären Übersteuerungsventils (200) in seine Übersteuerungsposition von einem fluiddruckgesteuerten Aktor (206) gesteuert wird.

6. Anhängerbremssystem nach Anspruch 5, wobei der fluiddruckgesteuerte Aktor (204) eine Verriegelung beinhaltet, um das temporäre Übersteuerungsventil (200) in der Übersteuerungsposition zu halten, ohne dass ein kontinuierlicher Fluiddruck vorhanden ist, und/oder optional,
wobei eine Bewegung des temporären Übersteuerungsventils (200) in seine inaktive Position von einem zweiten fluiddruckgesteuerten Aktor (204) gesteuert wird, oder alternativ,
wobei das temporäre Übersteuerungsventil (200) in seine inaktive Position vorgespannt ist.

7. Anhängerbremssystem nach einem der vorhergehenden Ansprüche, wobei das temporäre Übersteuerungsventil (200) eine erste Öffnung (200a), eine zweite Öffnung (200b) und eine dritte Öffnung (200c) beinhaltet, und optional,
wobei die erste Öffnung (200a) mit der Versorgungsleitung (44) verbunden ist und die dritte Öffnung (200c) mit der Wegfahrsperre (80) verbunden ist, und optional,
wobei, wenn sich das temporäre Übersteuerventil (200) in der Übersteuerungsposition befindet, die erste Öffnung (200a) mit der dritten Öffnung (200c) verbunden ist und, wenn sich das temporäre Übersteuerungsventil (200) in der inaktiven Position befindet, die zweite Öffnung (200b) mit der dritten Öffnung (200c) verbunden ist.

8. Anhängerbremssystem nach den Ansprüchen 11 bis 13, wobei die zweite Öffnung (200b) mit einer/der Abgabeöffnung (70b) oder einer/der Steuerleitung (72) verbunden ist oder die zweite Öffnung (200b) eine Entlüftung ist.

9. Anhängerbremssystem nach einem der vorhergehenden Ansprüche, beinhaltend ein Parkventil (52), das eine erste Position aufweist, in der die Wegfahrsperre (80) und/oder das Federbremssteuerventil (10) mit der Versorgungsleitung (44) verbunden ist/sind, und eine zweite Position, in der die Versorgungsleitung (44) blockiert ist und die Wegfahrsperre (80) und/oder das Federbremssteuerventil (10) entlüftet wird/werden, und optional,
wobei das Parkventil (52) betätigbar ist, um sich automatisch in die zweite Position zu bewegen, wenn der Druck in der Versorgungsleitung (44) unterhalb einer Schwelle liegt.

10. Anhängerbremssystem nach Anspruch 9 und direkt oder indirekt nach Anspruch 2, wobei das Parkventil (52) über das Shuntventil (46) mit der Versorgungsleitung (44) verbunden ist.

11. Anhängerbremssystem nach einem der vorhergehenden Ansprüche 2 bis 10, wobei das Shuntventil (46) einen ersten Einlass (46a), einen zweiten Einlass (46c), einen Auslass (46b), eine manuell betätigbare Taste und eine Steueröffnung beinhaltet, wobei der erste Einlass (46a) mit der Versorgungsleitung (44) verbunden ist, der zweite Einlass (46c) mit einem oder dem Anhängerreservoir (40) verbunden ist und der Auslass (46b) mit dem Federbremssteuerventil (10) verbunden ist und die Steueröffnung mit der Versorgungsleitung (44) verbunden ist.

12. Anhängerbremssystem nach einem der vorhergehenden Ansprüche, wobei das Federbremssteuerventil (10) einen Einlass (10a), einen Auslass (10b), einen Abgang (10c) und eine Steueröffnung (10d) beinhaltet, wobei der Einlass (10a) mit der Versorgungsleitung (44) verbunden ist und der Auslass (10b) mit der Federbremse verbunden ist und die Steueröffnung (10d) mit der Wegfahrsperre (80) verbunden ist, und optional,
wobei das Federbremssteuerventil (10) ein Vorspannelement (16) zum Vorspannen des Ventils (10) in eine erste Position beinhaltet, in der der Auslass (10b) mit dem Abgang (10c) verbunden ist, und die Steueröffnung (10d) fluiddruckbetätigt ist, so dass, wenn der erforderliche Druck an der Steueröffnung (10d) vorliegt, das Ventil (10) in eine zweite Position gedrängt wird, in der der Einlass (10a) mit dem Auslass (10b) verbunden ist.

13. Anhängerbremssystem nach einem der vorhergehenden Ansprüche, wobei die Wegfahrsperre (80) einen Einlass (84a), einen Auslass (84b) und eine Steueröffnung (89) beinhaltet, wobei der Einlass (84a) mit der Versorgungsleitung (44) verbunden ist und der Auslass (84b) mit der Steueröffnung (89) der Wegfahrsperre (80) und der Steueröffnung (10d) des Federbremssteuerventils (10) verbunden ist, und optional,
wobei die Wegfahrsperre (80) ein Vorspannelement (90) zum Vorspannen der Wegfahrsperre (80) in eine erste Position beinhaltet, in der ein internes Rückschlagventil (94) verhindert, dass Fluid zum Auslass (84b) fließt und, optional, der Auslass (84b) mit einem Abgang verbunden ist und die Steueröffnung (89) fluiddruckbetätigt wird, so dass, wenn der erforderliche Druck an der Steueröffnung (89) vorliegt, das Ventil in eine zweite Position gedrängt wird, in der der Einlass (84a) mit dem Auslass (84b) verbunden ist.

14. Anhängerbremssystem nach Anspruch 13, beinhaltend ein Notbremsübersteuerungsventil (54) beinhaltend einen ersten Einlass (54a) und einen zweiten Einlass (54c), einen Auslass (54b), wobei der erste Einlass (54a) mit dem Auslass (84b) der Wegfahrsperre (80) verbunden ist und der zweite Einlass (84c) mit der Versorgungsleitung (44) verbunden ist, optional über ein Anhängerreservoir (40), und der Auslass (54b) mit den Steueröffnungen (89, 10d) der Wegfahrsperre (80) und des Federbremssteuerventils (10) verbunden ist, und optional, wobei das Notbremsübersteuerungsventil (54) ein Vorspannelement zum Vorspannen des Ventils (54) in eine erste Position beinhaltet, in der sich der erste Einlass (54a) mit dem Auslass (54b) verbindet und elektrisch betätigbar ist, um das Ventil (54) gegen das Vorspannelement in eine zweite Position zu drängen, in der der zweite Einlass (54c) mit dem Auslass (54b) verbunden ist.

15. Anhänger, beinhaltend ein Anhängerbremssystem nach einem der Ansprüche 1 bis 14 oder ein Verfahren zum Betreiben des Anhängerbremssystems einschließlich eines der Merkmale der Ansprüche 1 bis 14.

## Revendications

1. Système de freinage de remorque, comprenant :
une conduite d'alimentation (44) destinée à être raccordée à une source continue de fluide pressurisé ;
un réservoir de remorque (40) où stocker un volume de fluide pressurisé ;
un frein à ressort, qui comporte une position de serrage et une position de desserrage, le frein à ressort passant sur la position de desserrage lorsque le fluide pressurisé se situe à hauteur ou au-dessus d'un seuil donné ;
une soupape de commande de frein à ressort (10) qui contrôle le débit du fluide vers le frein à ressort ;
un immobilisateur (80) comportant une position de desserrage de frein et une position d'immobilisation, qui contrôlent le débit du fluide pressurisé vers la soupape de commande du frein à ressort (10) ;
une soupape de neutralisation provisoire (200) comportant une position de neutralisation et une position inactive, et pouvant être activée pour passer d'une position à une autre indépendamment de la pression exercée dans la conduite d'alimentation (44) ; dans lequel, lorsque la soupape de neutralisation provisoire (200) est réglée sur la position de neutralisation, l'immobilisateur (80) reste sur la position d'immobilisation et le frein à ressort reste sur la position de serrage lorsque la conduite d'alimentation (44) n'est pas sous pression, et l'immobilisateur (80) passe sur sa position de desserrage de frein et la conduite d'alimentation (44) est automatiquement raccordée à la soupape de commande du frein à ressort (10) lorsque la conduite d'alimentation (44) est raccordée à une source de fluide, de sorte que le frein à ressort passe sur la position de desserrage.

2. Système de freinage de remorque selon la revendication 1, dans lequel, lorsque la soupape de neutralisation provisoire (200) est réglée sur la position inactive, l'immobilisateur (80) peut être activé pour à la fois passer sur la position de desserrage de frein, où la soupape de commande du frein à ressort (10) peut être activée pour orienter le débit de fluide pressurisé vers le frein à ressort ou pour purger la chambre du frein à ressort (58a), et passer sur la position d'immobilisation, où la soupape de commande du frein à ressort (10) ne peut être activée et/ou
comprenant une soupape de dérivation (45) qui comporte une position activée et une position désactivée ; dans lequel, lorsque la soupape de dérivation (46) est réglée sur la position activée, le réservoir de remorque (40) est directement ou indirectement raccordé à la soupape de commande du frein à ressort (10), et lorsque la soupape de dérivation (46) est réglée sur la position désactivée, la conduite d'alimentation (44) est directement ou indirectement raccordée à la soupape de commande du frein à ressort (10) et, facultativement,
dans lequel la soupape de dérivation (46) passe sur sa position désactivée lorsque la conduite d'alimentation (44) est raccordée à une source de fluide pressurisée.

3. Système de freinage de remorque selon l'une quelconque des revendications précédentes, comprenant une conduite de contrôle (72) destinée à être raccordée à une source de fluide pressurisé dans une situation de demande de freinage et, facultativement,
dans lequel le réglage de la soupape de neutralisation provisoire (200) sur sa position inactive est contrôlé par une pression exercée par la demande de freinage du frein de service, facultativement depuis un port de refoulement (70b) d'un modulateur/ensemble de frein à soupape (70) ou depuis la conduite de contrôle (72).

4. Système de freinage de remorque selon l'une quelconque des revendications précédentes, dans lequel la soupape de neutralisation provisoire (200) peut être manuellement activée sur sa position de neutralisation.

5. Système de freinage de remorque selon l'une quelconque des revendications 1 à 3, dans lequel le réglage de la soupape de neutralisation provisoire (200) sur sa position de neutralisation est contrôlé par un actionneur contrôlé par la pression du fluide (206).

6. Système de freinage de remorque selon la revendication 5, dans lequel l'actionneur contrôlé par la pression du fluide (204) comprend un loquet pour maintenir la soupape de neutralisation provisoire (200) sur la position de neutralisation sans la présence d'une pression du fluide continue et/ou, facultativement,
dans lequel le réglage de la soupape de neutralisation provisoire (200) sur sa position inactive est contrôlé par un second actionneur contrôlé par la pression du fluide (204) ou, en variante,
dans lequel la soupape de neutralisation provisoire (200) est sollicitée sur sa position inactive.

7. Système de freinage de remorque selon l'une quelconque des revendications précédentes, dans lequel la soupape de neutralisation provisoire (200) comprend un premier port (200a), un deuxième port (200b) et un troisième port (200c) et, facultativement,
dans lequel le premier port (200a) est raccordé à la conduite d'alimentation (44) et le troisième port (200c) est raccordé à l'immobilisateur (80) et, facultativement,
dans lequel, lorsque la soupape de neutralisation provisoire (200) est réglée sur la position de neutralisation, le premier port (200a) est raccordé au troisième port (200c) et, lorsque la soupape de neutralisation provisoire (200) est réglée sur la position inactive, le deuxième port (200b) est raccordé au troisième port (200c).

8. Système de freinage de remorque selon les revendications 11 à 13, dans lequel le deuxième port (200b) est raccordé à un/au port de refoulement (70b) ou à une/la conduite de contrôle (72) ou le deuxième port (200b) est un évent.

9. Système de freinage de remorque selon l'une quelconque des revendications précédentes, comprenant une soupape de parking (52) qui comporte une première position dans laquelle l'immobilisateur (80) et/ou la soupape de commande du frein à ressort (10) sont raccordés à la conduite d'alimentation (44) et une seconde position dans laquelle la conduite d'alimentation (44) est bloquée et l'immobilisateur (80) et/ou la soupape de commande du frein à ressort (10) est purgée et, facultativement,
dans lequel la soupape de parking (52) peut être activée pour passer automatiquement sur la seconde position lorsque la pression dans la conduite d'alimentation (44) se situe en deçà d'un seuil donné.

10. Système de freinage de remorque selon la revendication 9 et directement ou indirectement selon la revendication 2, dans lequel la soupape de parking (52) est raccordée à la conduite d'alimentation (44) par l'intermédiaire de la soupape de dérivation (46).

11. Système de freinage de remorque selon l'une quelconque des revendications précédentes 2 à 10, dans lequel la soupape de dérivation (46) comprend une première entrée (46a), une seconde entrée (46c), une sortie (46b), un bouton à commande manuelle et un port de contrôle, dans lequel la première entrée (46a) est raccordée à la conduite d'alimentation (44), la seconde entrée (46c) est raccordée à un ou au réservoir de remorque (40), et la sortie (46b) est raccordée à la soupape de commande du frein à ressort (10) et le port de contrôle est raccordé à la conduite d'alimentation (44).

12. Système de freinage de remorque selon l'une quelconque des revendications précédentes, dans lequel la soupape de commande du frein à ressort (10) comprend une entrée (10a), une sortie (10b), un échappement (10c) et un port de contrôle (10d), dans lequel l'entrée (10a) est raccordée à la conduite d'alimentation (44) et la sortie (10b) est raccordée au frein à ressort et le port de contrôle (10d) est raccordé à l'immobilisateur (80) et, facultativement,
dans lequel la soupape de commande du frein à ressort (10) comprend un élément de sollicitation (16) ayant pour fonction de solliciter la soupape (10) sur une première position, où la sortie (10b) est raccordée à l'échappement (10c), et le port de contrôle (10d) est actionné par la pression du fluide de sorte que, lorsque la pression requise est présente à hauteur du port de contrôle (10d), la soupape (10) est amenée sur une seconde position où l'entrée (10a) est raccordée à la sortie (10b).

13. Système de freinage de remorque selon l'une quelconque des revendications précédentes, dans lequel l'immobilisateur (80) comprend une entrée (84a), une sortie (84b) et un port de contrôle (89), dans lequel l'entrée (84a) est raccordée à la conduite d'alimentation (44) et la sortie (84b) est raccordée au port de contrôle (89) de l'immobilisateur (80) et au port de contrôle (10d) de la soupape de commande du frein à ressort (10) et, facultativement,
dans lequel l'immobilisateur (80) comprend un élément de sollicitation (90) ayant pour fonction de solliciter l'immobilisateur (80) sur une première position, où une soupape anti-retour interne (94) empêche le fluide de couler jusqu'à la sortie (84b) et, facultativement, la sortie (84b) est raccordée à un échappement, et le port de contrôle (89) est actionné par la pression du fluide de sorte que, lorsque la pression requise est présente à hauteur du port de contrôle (89), la soupape est amenée sur une seconde position où l'entrée (84a) est raccordée à la sortie (84b).

14. Système de freinage de remorque selon la revendication 13, comprenant une soupape de neutralisation de freinage d'urgence (54) comportant une première entrée (54a) et une seconde entrée (54c), une sortie (54b), dans lequel la première entrée (54a) est raccordée à la sortie (84b) de l'immobilisateur (80) et la seconde entrée (84c) est raccordée à la conduite d'alimentation (44), facultativement par l'intermédiaire d'un réservoir de remorqueur (40), et la sortie (54b) est raccordée aux ports de contrôle (89, 10d) de l'immobilisateur (80) et à la soupape de commande du frein à ressort (10) et, facultativement, dans lequel la soupape de neutralisation de freinage d'urgence (54) comporte un élément de sollicitation ayant pour fonction de solliciter la soupape (54) sur une première position, où la première entrée (54a) est raccordée à la sortie (54b), et peut être électriquement activée pour amener la soupape (54) contre l'élément de sollicitation sur une seconde position, où la seconde entrée (54c) est raccordée à la sortie (54b).

15. Remorque comprenant un système de freinage de remorque selon l'une quelconque des revendications 1 à 14 ou selon un procédé d'exploitation du système de freinage de remorque comprenant l'une quelconque des caractéristiques des revendications 1 à 14.
